(19) **Europäisches Patentamt**
**European Patent Office**
**Office européen des brevets**

(11) **EP 1 213 817 B1**

(12) **EUROPÄISCHE PATENTSCHRIFT**

| | |
|---|---|
| (45) Veröffentlichungstag und Bekanntmachung des Hinweises auf die Patenterteilung: **10.09.2008 Patentblatt 2008/37** | (51) Int Cl.: ***H02J 7/00*** *(2006.01)* |

(21) Anmeldenummer: **01250425.4**

(22) Anmeldetag: **03.12.2001**

(54) **Verfahren zur Ermittlung eines Erfordernisses zum Austausch eines Bauteils**

Method for the determination of a need to exchange a component

Procédé pour la détermination de la nécessité de changer un composant

(84) Benannte Vertragsstaaten:
**CH DE FR GB IT LI**

(30) Priorität: **11.12.2000 DE 10061665**

(43) Veröffentlichungstag der Anmeldung:
**12.06.2002 Patentblatt 2002/24**

(73) Patentinhaber: **Francotyp-Postalia GmbH**
**16547 Birkenwerder (DE)**

(72) Erfinder:
• **Rosenau, Dirk**
**13469 Berlin (DE)**
• **Schlaaff, Torsten**
**16341 Zepernick (DE)**

(56) Entgegenhaltungen:
• **PATENT ABSTRACTS OF JAPAN Bd. 2000, Nr. 09, 13. Oktober 2000 (2000-10-13) & JP 2000 184619 A (MATSUSHITA ELECTRIC IND CO LTD), 30. Juni 2000 (2000-06-30)**
• **PATENT ABSTRACTS OF JAPAN Bd. 1999, Nr. 12, 29. Oktober 1999 (1999-10-29) & JP 11 183575 A (FUJI ELECTRIC CO LTD), 9. Juli 1999 (1999-07-09)**
• **PATENT ABSTRACTS OF JAPAN Bd. 1998, Nr. 02, 30. Januar 1998 (1998-01-30) & JP 09 269360 A (SHINDENGEN ELECTRIC MFG CO LTD), 14. Oktober 1997 (1997-10-14)**
• **PATENT ABSTRACTS OF JAPAN Bd. 1997, Nr. 12, 25. Dezember 1997 (1997-12-25) & JP 09 211091 A (MATSUSHITA ELECTRIC IND CO LTD), 15. August 1997 (1997-08-15)**

**Beschreibung**

Die Erfindung betrifft ein Verfahren zur Ermittlung eines Erfordernises zum Austausch eines Bauteils, gemäß der im Oberbegriff des Anspruchs 1 angegebenen Art. Eine Anwendung des Verfahrens kann in einem postalischen Sicherheitsmodul erfolgen, der insbesondere für den Einsatz in einer Frankiermaschine bzw. Postbearbeitungsmaschine oder Computer mit Postbearbeitungsfunktion geeignet ist und der einen Batterietausch gestattet.

Es sind vielfältige Sicherungsmaßnahmen zum Schutz gegen Ausfälle bzw. Störungen von intelligenten elektronischen Systemen bekannt. Es ist bereits aus EP 417 447 B1 bekannt, in elektronischen Datenverarbeitungsanlagen besondere Module einzusetzen und mit Mitteln zum Schutz vor einem Einbruch in ihre Elektronik auszustatten. Solche Module werden nachfolgend Sicherheitsmodule genannt.

Postbearbeitungssysteme werden heute modular aufgebaut um bei Produktvarianten auf möglichst viele bestehende Module zurückgreifen zu können. Diese Vorgehensweise erspart die ständige Neuentwicklung von Funktionalitäten für den Einsatzt in neuen Varianten von Systemen. Module werden hierbei so entworfen, daß sie wenigstens eine Funktion ausführen können, die in unterschiedlichen Varianten genutzt werden soll. Weitere Vorteile von modular aufgebauten Systemen ist der preisgünstige und einfache Austausch von Modulen, falls diese verbraucht sind oder ausfallen. Die Anzeige des Verbrauchs und auch die Warnung vor zukünftigen Ausfällen von Modulen sind Mechanismen die den rechtzeitigen Wechsel von solchen Modulen ermöglichen und heute zum Serviceumfang moderner Postbearbeitungssysteme gehören. Für diese Servicefunktionalität sind verschiedene Techniken im Einsatz. So wurde bereits im DE 195 49 376 A1 eine Anordnung zur Ermittlung einer Farbbandrestmenge für Thermotransferdruckverfahren vorgeschla-gen, in der das Nahen des Farbbandendes durch ein optisches Erkennungsmittel eine Marke auf dem Farbband detektiert oder durch ein Steuermittel festgestellt wird, welches die Zahl der Abdrucke mitzählt. Die letztere Lösung setzt einen linearen Zusammenhang zwischen der Anzahl der Abdrucke und der Farbbandlänge voraus.

Bei Verbrauchsmaterialien wie Tinte aus Druckköpfen können direkte Messungen oder statistische Zähltechniken bei der Nutzung eingesetzt werden, um eine Bestimmung des verbrauchten Materials vorzunehmen. Trotz des nichtlinearen Zusammenhanges zwischen Tintenrestmenge und Anzahl an Abdrucken wurde in der nicht vorveröffentlichten deutschen Patentanmeldung Nr. 199 58 948.8-27 ein Verfahren zur Bestimmung der Anzahl von mit einer Tintenrestmenge ausführbaren Drucken und eine Anordnung zur Durchführung des Verfahrens vorgeschlagen. Voraussetzung ist jedoch, daß es sich bei der Tintentankkassette nicht um ein Priraterieprodukt sondern um ein Oginalprodukt handelt, welches mit einer definerten Tintenmenge gefüllt ausgeliefert wird.

Bei allen Bauteilen, Baugruppen oder Modulen, die z.B. auf Grund ihres physikalischen Aufbaus eine kürzere Lebensdauer als die des gesamten Postbearbeitungssystems besitzen, ist eine frühzeitige Erkennung des Ausfalls wünschenswert. Im DE 199 12 780 A1 wurde unter dem Titel: Anordnung für ein Sicherheitsmodul vorgeschlagen, das Sicherheitsmodul mit einer auswechselbaren Batterie auszustatten. Aus vorsichtigen Erfahrungswerten über den Stromverbrauch des Sicherheitsmoduls einerseits und der Kenntnis Nennkapazität der Batterie, wird die mögliche Batterie-Lebensdauer von Hersteller des Sicherheitsmoduls geschätzt und letztere mit einem Sicherheitszeitabstand vorzeitig gewechselt. Ein frühzeitiger Wechsel ist jedoch kostenintensiv, zumal es sich um teuere Langzeit Lithium-Batterien handelt.

Auch hier können bekannte Techniken eingesetzt werden, um rechtzeitige Warnungen abzugeben, beispielsweise um die Notwendigkeit eines Batteriewechsels zu melden. Gewöhnlich wird eine Datums-Schwelle festgelegt, deren Überschreitung durch den Datums-Zählvorgang die Warnung auslöst. Es ist jedoch möglich, daß das entsprechende Bauteil oder Modul noch nicht völlig verbraucht ist bzw. wirklich bald ausfällt. Oft ist die festgelegte Schwelle von verschiedenen Parametern im Betrieb abhängig (z.B. Temperatur, Feuchtigkeit). Diese Parameter können die tatsächliche Schwelle erheblich verschieben. Dies kann zur Folge haben, daß unter bestimmten Betriebsbedingungen der Verbrauch höher oder niedriger bzw. der Ausfall früher oder später erfolgen kann. In allen diesen Fällen können unterschiedliche finanzielle Schäden für den Nutzer oder Eigentümer des Systems entstehen, die es zu verhindern gilt.

In JP 11 183575 A wurde eine periodische Belastung der Batteriekapazität durch eine direkte elektrische Messung eines Spannungsabfalls an einem Lastwiderstand vorgeschlagen. Ein anderer Vorschlag basiert auf Temperatur-, Strom- und Spannungsmessungen, um den Zeitpunkt des Batterieaustausches mitzuteilen (JP 09 269360 A). Aus der JP 09 211091 A geht das Prüfen des elektrischen Zustandes von Batterien auf Basis einer stündlichen Temperaturmessung hervor. Für eine ununterbrochene Stromversorgung nach JP 2000 184619 A wird die Klärung der aktuellen Batterie-Lebensdauer durch die Einbeziehung unterschiedlicher Parameter verbessert._Direkte Messungen müssen abhängig vom Bauteil bzw. Modul individuell aufgebaut werden und können schnell die Stückkosten erhöhen falls mehrere Bauteile oder Module überwacht werden sollen. Weiterhin werden einige Bauteile bzw. Module durch direkte Meßtechniken in ihrer Funktion eingeschränkt. So kann z.B. die Kapazitätsmessung einer Batterie erheblich die Lebensdauer reduzieren, falls die normale Stromaufnahme geringer ist, als die für die Messung notwendige.

Ein Sicherheitsmodul kann in seinem Lebenszyklus verschiedene Zustände einnehmen, die aber nur angezeigt werden, wenn Systemspannung anliegt. Anderenfalls würde die Batterie des Sicherheitsmoduls schnell erschöpft sein. Die Lebensdauer der Batterie soll dem Lebenszyklus angemessen und möglichst hoch sein. Bei ausgeschalteter Frankiermaschine, Stromunterbrechungen oder Systemspannungsausfall müssen die Postregisterdaten, kryptografische Schlüssel und andere sensible Daten erhalten bleiben und auch die Echtzeituhr muß weiterlaufen. Hinzu kommen permanente Überwachungsfunktionen, die ohne Unterbrechung weiterlaufen müssen. Hierdurch steigt der Bedarf an verfügbarem Batteriestrom mit der Folge, daß die Lebensdauer der Batterie sinkt.

Der Erfindung liegt die Aufgabe zugrunde, ein Verfahren zur Ermittlung eines Erfordernises zum Austausch eines Bauteils zu entwickeln, wobei die Messung von einem Parameter vermieden wird, wenn dessen Messung auf den Verbrauch oder die Lebensdauer des Bauteils einen ungünstigen Einfluß nimmt. Die Sicherheit vor einem Ausfall insbesondere von Bauteilen mit batteriegestützten Datenspeichern ist zu erhöhen und gleichzeitig die Lebensdauer der Batterie optimal auszuschöpfen. Das Verfahren soll beispielsweise in Frankiermaschinen Anwendung finden, für die besondere Sicherheitsforderungen bezüglich der Postregisterdaten mit den geldwerten Abrechnungsdaten gelten.

Die Aufgabe wird mit den Merkmalen des Anspruchs 1 gelöst.

Eine Lösung des Problems wurde mit der Hilfe von indirekten Meßtechniken entwickelt, welche in der Zeit nach der Durchführung von mindestens zwei zeitlich versetzten Parametermessungen einen Warnhinweis rechtzeitig vor dem Ausfall des Moduls liefern. Es werden beliebig skalierbare Messungen von den wichtigsten Parametern, die einen Einfluß auf den Verbrauch oder Ausfall eines Bauteils bzw. Moduls haben vorgenommen. Diese Parameter sind, falls noch nicht vom Hersteller selbst, durch Testreihen empirisch zu ermitteln und zum Beispiel in Tabellenform abzulegen. Für jeden Parameter findet sich nun in Abhängigkeit seiner gemessenen Größe eine vorbestimmte Änderung des Verbrauchs oder des Ausfalls eines Bauteils bzw. Moduls. Neben der normalen statistischen Erfassung mittels Zähltechnik, die bisher als Stand der Technik vorgenommen wurde, kann nun die gemessene Parametergröße über ihre absolute oder prozentuale Änderung einen geeigneten (positiven oder negativen) zusätzlichen Einfluß nehmen, indem die Zähltechnik beeinflußt wird. Bei mehreren Parametern werden entsprechend mehr Einflüsse geltend gemacht. Auf diese Weise entsteht eine indirekte Messung die eine wesentlich präzisere Angabe der neuen Warnschwelle für den Verbrauch oder Ausfall eines Bauteils bzw. Moduls herangezogen werden kann. Es ist vorgesehen, dass ein Zählstand so modifiziert wird, daß dieser sich einer für das Bauteil spezifischen Ausfallschwelle nähert und dass eine Warnung vom Gerät ausgegeben wird, bevor das Verbrauchsende bzw. Lebensdauerende des Bauteils erreicht wird. Zur Durchführung des Verfahrens ist eine Anordnung vorgesehen, bestehend aus einem Zeitgeber zur Abgabe eines Zeitparameters, wenigstens einem Sensor zur Meßwertaufnahme eines Parameters, wenigstens einem Bauteil, dessen Ausfall von diesem Parameter beeinflußt wird, einem Mikroprozessor der mit dem Sensor und dem Zeitgeber verbunden ist, einem Speicher, der für diesen Parameter spezifische Werte enthält, einem Speicher, der einen Zählstand speichert, der den Ausfall des Bauteils bestimmt und einem Programmspeicher, der mit dem Mikroprozessor verbunden ist, wobei der Mikroprozessor eine im Programmspeicher befindliche Funktion ausführt, welche in Abhängigkeit vom Meßwert des Parameter, dem Zeitparameter und Zählstand letzteren so modifiziert, daß dieser sich einer für das Bauteil spezifischen Ausfallschwelle nähert und beim Erreichen eine Warnung generiert. Dieser einmal geleistete indirekte Meßaufwand und Aufbau ist zudem für mehrere unterschiedliche Bauteile bzw. Module gleichzeitig einsetzbar, falls die Kennlinien der beeinflussenden Parameter bekannt sind und ebenfalls ausgewertet werden. Der Modulprozessor eines Sicherheitsmoduls überwacht die Batterie bezüglich Lebensdauer, hardwaremäßige Abrecheneinheit und Speicher bezüglich der Abrechnungsfunktion bzw. -Daten sowie andere Baugruppen bezüglich weiterer Funktionen. Dabei steht die Verfügbarkeit des Systems im Vordergrund sowie eine geeignete Reaktion darauf. Am Beispiel der Batterieüberwachung, wird die Erfindung näher erläutert. Das Erfordernis zum Austausch der Batterie wird über eine Auswertung einer Messung der Umgebungstemperatur der Batterie und einer Zeitmessung ermittelt. Eine die Kapazität der Batterie belastende direkte Strom/Spannungsmessung kann somit entfallen. Die Auswertung einer Messung der Umgebungstemperatur erfolgt in Bezug auf den Selbstentladestrom der Batterie. Aufgrund einer ununterbrochenen Echtzeitmessung können von einem Mikroprozessor Zeitintervalle ermittelt wird, wobei zwischen einem Transportzeitintervall sowie Betriebs- und Ruhezeitintervallen des Gerätes unterschieden wird. Die Messung und die Auswertung der Umgebungstemperatur in Bezug auf den Selbstentladestrom der Batterie erfolgt im Betriebszeitintervall, d.h. nach dem Transportzeitintervall oder nach einem Ruhezeitintervall des Gerätes. Im Rahmen der Auswertung werden Strom/Zeit-Produkte für die vorgenannten Intervalle im Betriebszeitintervall gebildet, wobei empirisch ermittelte Ströme in die Berechnung eingehen, die im Transportzeitintervall oder im Ruhezeitintervall des Gerätes fließen und die Batteriekapazität vermindern.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1,    Temperaturabhängigkeit der Batteriekapazität,

Figur 2,    Meßschaltung (prior Art),

Figur 3,    Meßschaltung für indirekte Bestimmung eines Wertes,

Figur 4,    Blockschaltbild des Sicherheitsmoduls in einer Frankiermaschine,

Figur 5,     Draufsicht auf das Sicherheitsmodul,

Figur 6,     Seitenansicht des Sicherheitsmoduls,

Figur 7,     Flußdiagramm.

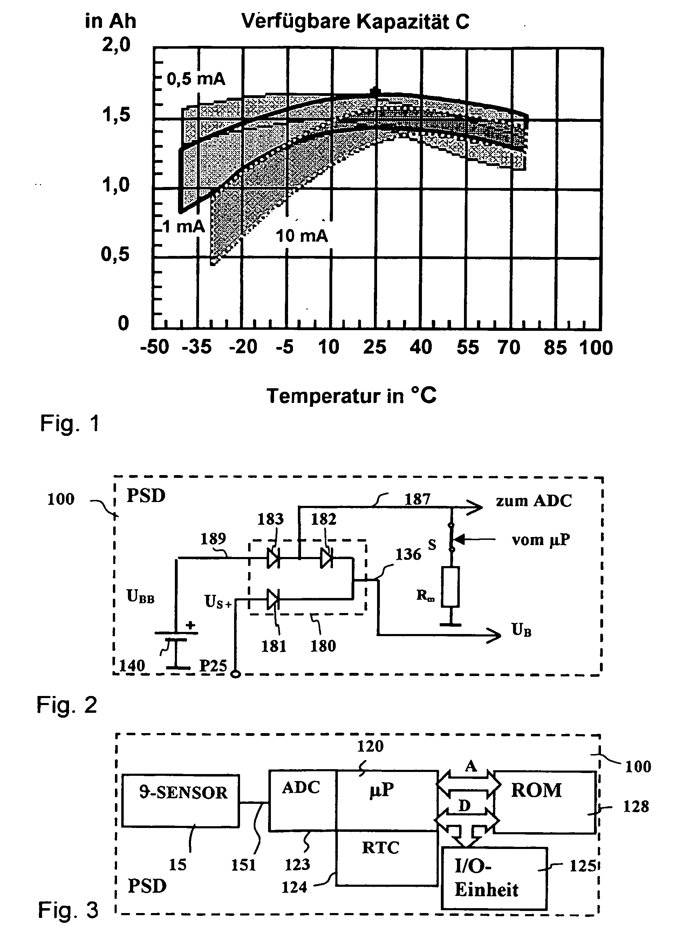

In der Figur 1 ist die Temperaturabhängigkeit der Kapazität einer Lithium-Batterie (Fa. Sonnenschein) dargestellt. Deren Kapazität schwankt bei einem Laststrom von $I_{LB}$ = 10 mA im zulässigem Betriebstemperaturbereich von +5°C bis + 40°C um ca. ein Fünftel (0,3 Ah). Bei einem geringerem Laststrom von $I_{LB}$ = 0,5 mA liegt die Kapazitätsschwankung bis zu einer Größenordnung darunter.
Im zulässigem Transporttemperaturbereich von -34°C bis + 66°C und bei einem Laststrom von $I_{LT}$ = 10 mA schwankt die Kapazität um mehr als die Hälfte aber um mehr als eine Größenordnung weniger bei einem geringerem Laststrom von $I_{LT}$ = 0,5 mA = 500$\mu$A. Beim Transport eines Sicherheitsmoduls fließt ein Laststrom von maximal $I_{LT}$ = 50 $\mu$A, d.h. er liegt eine Größenordnung über dem Strom der Batterieselbstentladung bei 25°C. Der Laststrom wird durch Bauteile verursacht, die teilweise ein entgegengesetztes Temperaturverhalten haben können. Im Modulprozessor des Sicherheitsmoduls ist u.a. eine Echtzeituhr integriert, die während der Transportzeit ständig weiterläuft.
Die Anfangskapazität sei $C_{t0}$ zum Zeitpunkt to und der Kapazitätsverlust am Ende der Transportzeit zum Zeitpunkt $t_1$ sei $C_{t1}$. Die Echtzeituhr wird zum Zeitpunkt to abgefragt und Datum und Uhrzeit werden zusammen mit der Anfangskapazität $C_{t0}$ gespeichert. Ein später gebildetes Strom/Zeit-Produkt $C_{t1}$ erlaubt die Kapazitätsverminderung annähernd unter Worst Case-Bedingungen zu bestimmen, ohne eine direkte Kapazitätsmessung vornehmen zu müssen. Durch eine Batterieselbstentladung bei +66°C sinkt die entnehmbare Kapazität um 40% auf 60% der Anfangskapazität $C_{t0}$ innerhalb von 4 Jahren (= 35064 h) Lagerzeit. Hinzu kommt die zuvor erwähnte Kapazitätsverminderung durch den Laststrom von $I_{LT}$ = 0,05 mA. Nach dem Transport verbleibt damit eine Restkapazität:

$$C_{Rest} = C_{t0} - C_{t1} = C_{t0} - t_1 (I_{LT} + I_S) \qquad (1)$$

mit dem temperaturabhängigen Batterieselbstentladesstrom $I_S$ = 0,4 $C_{t0}$/35064 h. Da der Laststrom $I_{LT}$ - wenn auch nur in einem geringem Maße - temperaturabhängig ist, soll in die Gleichung (1) ein empirisch ermittelter Maximalwert eingesetzt werden.
Die Figur 2 zeigt eine bekannte Meßschaltung für eine zweite Batterie 140. Ein Netzteil dient als Quelle einer Systemspannung Us+. Die auswechselbar angeordnete zweite Batterie 140 dient als Quelle zur Notversorgung für das Sichermodul 100, wenn keine Systemspannung Us+ vorhanden ist. Beide Quellen sind über einen Spannungsumschalter 180 voneinander entkoppelt und so zusammengeschaltet, daß an dessen Ausgang die jeweils höhere Spannung $U_B$ anliegt, wobei gilt:

$$U_B = U_S, \quad \text{wenn} \ U_S > U_{BB} \qquad (2)$$

Die zweite Batterie 140 liegt mit ihrem Pluspol über die Leitung 189 an einem der beiden Eingänge des Spannungsumschalters 180 an. Eine Reihenschaltung von Schottky-Dioden 183, 182 führt auf den Ausgang des Spannungsumschalters 180. Am Mittelabgriff der Reihenschaltung liegt einerseits über einen Schalter S, ein Meßwiderstand Rm an Masse und andererseits führt eine Leitung 187 über einen Analog/Digital-Umsetzer ADC auf einen Mikroprozessor (nicht gezeigt). Letzterer kann den Schalter S wieder öffnen, wenn die Messung beendet ist.. Die zweite Batterie 140 hat eine etwas höhere Spannung von $U_{BB}$ = 3,6 V und der Ausgang des Spannungsumschalters 180 legt die Batteriespannung $U_B$ = $U_{BB}$ - $U_V$ an (nicht dargestellte) Komponeten des Sicherheitsmoduls an. Die Verlustspannung $U_V$ an den Dioden bzw. Schaltern fällt ab, wenn statt der Dioden elektronisch steuerbare Schalter eingesetzt werden.
Die typischen Entladekurven beispielsweise bei 25°C zeigen für Lithium-Batterien einen annähernd idealen Verlauf im Spannungs/Zeit-Diagramm bis kurz vor dem Lebensdauerende, wo die Entladekurve stark abknickt. Diese Linearität erlaubt bei einer direkten Spannungsmessung am Meßwiderstand eine Auswertung, ob die Spannung vorhanden ist, bevor ein nichtlinearer Bereich beginnt, in welchem die Entladekurve stark abknickt. Eine Kapazitätsverminderung durch ein Strom/Zeit-Produkt, das durch die direkte Spannungsmessung bedingt ist, ist aber wesentlich größer als eine Kapazitätsverminderung durch ein Strom/Zeit-Produkt, das für die indirekte Kapazitätsmessung empirisch bestimmt wurde. Durch Berücksichtigung des Stromverbrauches der Komponenten und durch Auswertung einer Umgebungstemperaturmessung in Bezug auf den Selbstentladestrom der Batterie, kann die Kapazitätsverminderung indirekt ermittelt und ein Erfordernis zum Austausch der Batterie festgestellt werden. Aufgrund einer ununterbrochenen Echtzeitmessung können von einem Mikroprozessor Zeitintervalle ermittelt werden, die in einem unterschiedlichen Maße zur Kapazitätsverminderung beitragen, wobei zwischen einem Transportzeitintervall sowie Betriebs- und Ruhezeitintervallen unterschieden wird. Die Betriebs- und die Ruhezeitintervalle alternieren. Erfindungsgemäß ist vorgesehen, dass in den Betriebszeitintervallen die Strom/Zeit-Produkte berechnet werden, insbesondere für den temperaturabhängigen Batterieentladestrom, der während der Betriebszeitintervalle des Gerätes fließt, sowie für den temperaturabhängigen Batterieentladestrom und einen in den Ruhezeitintervallen fließenden Laststrom $I_{LT}$.

In der Figur 3 ist eine Meßschaltung für indirekte Bestimmung eines Wertes dargestellt. Ein Sensor 15, vorzugsweise ein Temperatursensor ist über eine Leitung 151 und einen Analog/Digital-Umsetzer ADC 123 mit einem Mikroprozessor 120 verbunden. Letzterer kann der Modulprozessor des Sicherheitsmoduls PSD 100 sein, der intern einen ADC und eine Echtzeituhr RTC 124 aufweist. Der Mikroprozessor 120 ist mit einem Flash ROM 128 über Adressen- und Datenleitungen und mit einer Ein/Ausgabe-Einheit I/O 125 verbunden.

Eine - nicht gezeigte - erste Batterie 134 befindet sich mit dem Sicherheitsmodul direkt in einem für den Nutzer nicht zugänglichen Sicherheitsbereich eines Gerätes, beispielsweise einer Frankiermaschine. Im Unterschied zur auswechselbaren Batterie gemäß DE 199 12 780 A1 kann die erste Batterie 134 auf dem Sicherheitsmodul fest eingelötet werden und sie kann relativ klein und billig sein. Die Speicherzeit bei ausschließlicher Versorgung durch diese Batterie kann in der Größenordnung von wenigen Jahren liegen, jedoch muß die Lagerzeit dieser Batterie ≥ 12 Jahre sein. Die Lebensdauer der Batterie kann theoretisch wegen ihrer Sebstentladung maximal 0,1 Megastunden und praktisch 0,015 Megastunden erreichen, da die Echtzeituhr RTC 124 ständig mit versorgt werden muß. Letzteres entspricht wenigstens 12 Jahre. Diese Batterie ist eine 3 V Lithium-Batterie und kann während des laufenden Produktionsprozesses bereits mit dem batteriespannungsbedürftigen Sicherheitsmodul/Bauelement verbunden werden, um die Speicherung von Informationen (Initialisierung) zu ermöglichen.

In einem Postbearbeitungssystem befindet sich wenigstens ein Sensor sowie eine in geeigneter Form gespeicherte Parameter oder ermittelbare Kennline der eingesetzten Batterie. Dieser Sensor kann beispielsweise ein Temperatursensor sein. Das Postbearbeitungssystem enthält wenigstens ein Bauteil bzw. Modul, welches von einem Verbrauch oder Ausfall bedroht ist. Dieses Bauteil kann eine Batterie sein oder ist irgendein Bauteil bzw. Modul. Die Temperatur hat nun einen erheblichen Einfluß auf die Kapazität der Batterie und kann deren Verbrauch stark verändern bzw. den Ausfall ganzer Module bewirken, die von der Batterie versorgt werden. In einem Postbearbeitungssystem werden mit Hilfe von Batterien Sicherheitsmodule mit Spannung versorgt, die Postregister oder sogar maschinenübergreifende Geheimnisse sichern. Da in der Regel die Lebensdauer eines Postbearbeitungssystems die der Batterie übersteigt, ist ein geeigneter Warnhinweis für einen anstehenden Austausch oder eine Energienachfüllung erforderlich. Eine präzise Bestimmung der Kapazität durch eine direkte Messung ist teuer und reduziert zudem die Kapazität. Andererseits ist ein frühzeitiger Wechsel oft kostenintensiv. Daher kann hier z.B. ein Mikroprozessor mit Hilfe eines Zählstandes, der vom Sensor aufgenommenen Temperatur und der für diese Batterie entsprechenden Kennlinie eine Kapazität ermitteln. Diese darf eine vorgegebene Schwelle nicht erreichen, ohne daß vom System eine Warnung ausgegeben wird. Hierbei ist es unerheblich ob die Kennlinie in Tabellenform abgelegt oder anders berechnet werden kann. Die von diesem Mikroprozessor ermittelte Kapazität wird um so präziser, je häufiger diese Ermittlung vorgenommen wird und je mehr Parameter in die Ermittlung einfließen. Die Messergebnisse vom Temperatursensor können gleichzeitig für andere Bauteile oder Module (Ink- oder Thermodruckkopf) genutzt werden.

Beim Betrieb ab dem Zeitpunkt $t_1$ wird das Sicherheitsmodul mit einer Systemspannung versorgt. Damit endet das Transportzeitintervall $t_1 - t_0$.

Zunächst wird zum Zeitpunkt $t_1$ die Raumtemperatur $\vartheta_1$ gemessen, um zu entscheiden, ob die Temperatur im zulässigen Temperaturbereich für den Betrieb des Modul liegt. Dann wird für die indirekte Kapazitätsmessung gemäß der Gleichung (1) das empirisch bestimmte Strom/Zeit-Produkt $C_{t1}$ für die Ruhezeit und/oder für die Transportzeit gebildet und hinsichtlich der Verminderung der Batteriekapazität ausgewertet.

Zwar wird die Umgebungstemperatur gewöhnlich innerhalb des zulässigen Betriebstemperaturbereiches von +5°C bis + 40°C liegen, jedoch kann sich das Sicherheitsmodul auf ca. 60 ° C während des Betriebes erhitzen. Zum Zeitpunkt $t_1$, beispielsweise am Beginn einen Arbeitstages, hat das Sicherheitsmodul noch die Raumtemperatur $\vartheta_1$. Zum Zeitpunkt $t_2$ bzw. $t_3$ sei die Temperatur $\vartheta_2$ bzw. $\vartheta_3$ und der Kapazitätsverlust sei $C_{t2}$ für das Zeitintervall $t_2 - t_1$ und $C_{t3}$ für das Zeitintervall $t_3 - t_2$. Die Echtzeituhr wird zum Zeitpunkt $t_1$, $t_2$ und $t_3$ abgefragt. Das Datum, die Uhrzeit und die Temperaturen $\vartheta_1$, $\vartheta_2$ bzw. $\vartheta_3$ werden gespeichert.

Durch den Batterieselbstentladestrom $I_{S\vartheta1}$ bei $\vartheta_1$ = +20°C sinkt die entnehmbare Kapazität um 10% auf 90% der Anfangskapazität $C_{t0}$ innerhalb von 10 Jahren (=87648 h) Lagerzeit. Durch den Batterieselbstentladestrom $I_{S\vartheta2}$ bei $\vartheta_2$ = +44°C sinkt die entnehmbare Kapazität um 25% auf 75% der Anfangskapazität $C_{t0}$ innerhalb von 7 Jahren (= 61344 h) Lagerzeit. Durch den Batterieselbstentladestrom $I_{S\vartheta3}$ bei $\vartheta_3$ = +60°C sinkt die entnehmbare Kapazität um 35% auf 65% der Anfangskapazität $C_{t0}$ innerhalb von 5 Jahren (= 43824 h) Lagerzeit. Die Temperatur des Sicherheitsmoduls steigert sich invers zur Exponentialkurve. Beispielsweise hat sich die Temperatur des Sicherheitsmoduls im Zeitintervall $t_2 - t_1$ näherungsweise linear auf $\vartheta_2$ = +44°C und im Zeitintervall $t_3 - t_2$ näherungsweise linear auf $\vartheta_3$ = +60°C gesteigert,

wobei das letztere Zeitintervall mehr als doppelt so lang ist, wie das erstere. Bei anliegender Systemspannung wird der Laststrom, d.h. zum Beispiel für die Echtzeituhr, vom Netzteil getragen und verursacht keine Kapazitätsverminderung. Somit fließt nur der Batterieselbstentladestrom und es verbleibt eine Restkapazität:

$$C_{Rest} = C_{t0} - \{ C_{t1} + C_{t2} + C_{t3} \} \qquad\qquad (3)$$

mit

$$C_{t2} = (t_2-t_1)(1/2)[ I_{S\vartheta_1} + I_{S\vartheta_2}] \qquad \text{zum Beispiel:} \qquad (4)$$
$$= (t_2-t_1)(1/2)[(0,1C_{t0}/87648 \text{ h}) + (0,25C_{t0}/61344 \text{ h})]$$

und

$$C_{t3} = (t_3-t_2)(1/2)[I_{S\vartheta_2} + I_{S\vartheta_3}] \qquad \text{zum Beispiel:} \qquad (5)$$
$$= (t_3-t_2)(1/2)[(0,25C_{t0}/61344 \text{ h}) + (0,35C_{t0}/43824 \text{ h})]$$

Durch eine Erhöhung der Anzahl an Messungen bis zum Ausschalten der Maschine wird eine bessere Annäherung an den realen Temperaturverlauf erreicht. Möglich sind sowohl eine periodische Messung als auch eine von einem Ereignis bestimmte Auslösung des Temperaturmeßvorganges, einschließlich einer Messung beim Ausschalten der Maschine.

Während der Ruhezeit bzw. vor dem Betreiben des Sicherheitsmoduls fließt ebenfalls wie beim Transport ein max. Laststrom von $I_{LT}$ = 0,05 mA. Im Gebäude oder in einem klimatisierten Raum, in welchem das Sicherheitsmodul betrieben werden soll, wird die Umgebungstemperatur gewöhnlich innerhalb des zulässigen Betriebstemperaturbereiches von +5°C bis + 40°C liegen. Ohne Systemspannung kann aber keine Temperaturmessung vorgenommen werden, so das eine Temperatur-Schätzung erforderlich ist. Jedoch kann angenommen werden, dass die Batterie des Sicherheitsmodul nach dem Ausschalten relativ schnell die Umgebungstemperatur annimmt, die +44°C nicht überschreiten darf. Weiterhin soll angenommen werden, dass nachts die Umgebungstemperatur weiter abkühlt und morgens +20°C nicht übersteigt. Durch eine Batterieselbstentladung bei +44°C (worst case) sinkt die entnehmbare Kapazität um 25% auf 75% der Anfangskapazität $C_{t0}$ innerhalb von 7 Jahren (= 61344 h) Lagerzeit. Das entspricht einem Selbstentladestrom von ca. 4$\mu$A. Näherungsweise hat sich die Temperatur des Sicherheitsmoduls im Ruhezeitintervall $t_4$ - $t_3$ von + 44°C linear auf $\vartheta_4$ = +20°C verringert. Zum Beispiel bei +20°C beträgt der Selbstentladestrom nur noch ca. 1$\mu$A. Bei einer noch geringeren Temperatur, sinkt die Kapazität durch Batterieselbstentladung zwar weiter, aber in einem geringerem Maße. Deshalb kann näherungsweise angenommen werden, dass der Batterieselbstentladestrom zum Zeitpunkt $t_4$ ca. 1$\mu$A beträgt. Hinzu kommt die zuvor erwähnte Kapazitätsverminderung durch den Laststrom von $I_{LT}$ = 0,05 mA. Nach der Ruhezeit verbleibt damit eine Restkapazität:

$$C_{Rest} = C_{t0} - \{ C_{t1} + C_{t2} + C_{t3} + C_{t4} \} \qquad\qquad (6)$$

mit

$$C_{t4} = (t_4 - t_3)(1/2)[I_{S92} + I_{S94}] \qquad \text{zum Beispiel:} \qquad (7)$$

$$= (t_4 - t_3)(1/2)[2I_{LT} + (0,25\, C_{t0}/61344\, h) + 1\mu A]$$

Die Restkapazität kann somit nach einer Formel (8) berechnet werden:

$$C_{Rest} = C_{t0} - \{\, C_{t1} + C_{t2} + C_{t3} + C_{t4} + \ldots + C_{tn} + \ldots + C_{tz}\} \qquad (8)$$

Sie kann folglich für jedes Ereignis berechnet werden. Auch das Ereignis des Transportes kann sich wiederholen, wobei wieder die entsprechend verschärften Bedingungen in die Berechnung eingebracht werden. Das Sicherheitsmodul kommt vorzugsweise in Metern bzw. Frankiermaschinen zum Einsatz. Da jeder Ortswechsel der Datenzentrale und Postbehörde mitgeteilt werden muß, wozu eine Eingabe in das Meter bzw. in die Frankiermaschine notwendig ist, kann auf diese Information auch vom Sicherheitsmodul zugegriffen werden. Abschließend muß für jede Batterie aus einem Datenblatt oder empirisch ein Grenzwert $C_L = F\, C_{t0}$ ermittelt werden, anhand dessen vom Mikroprozessor überprüft werden kann, ob die verbleibende Restkapazität noch ausreicht. Die Batterie muß gemäß Gleichung (9) gewechselt werden, falls:

$$C_L \geq C_{Rest} \qquad (9)$$

In Verbindung mit Gleichung (8) ergibt sich eine Gleichung (10):

$$C_{t0}(1 - F) - C_{t1} \leq C_{t2} + C_{t3} + \ldots + C_{tn} + \ldots + C_{tz} \qquad (10)$$

Wenn (1 - F) = x, dann gilt für n Messungen mit $2 \leq n \leq z$ die Gleichung (11):

$$x \cdot C_{t0} - C_{t1} \leq \sum_{n=2}^{z} C_{tn} \qquad (11)$$

Zur Auswertung der Messung der Umgebungstemperatur der Batterie und der Echtzeitmessung wird also die Differenz zwischen einer Restkapazität $x \cdot C_{t0}$ und einem ermittelten Strom/Zeit-Produkt $C_{t1}$ für ein Transportzeitintervall ermittelt, wobei die Restkapazität einem vorbestimmten Anteil von x% der ursprünglichen Batteriekapazität $C_{t0}$ entspricht. Die Batterie muß erst gewechselt werden, wenn die vorgenannte Differenz gleich oder kleiner ist, als die Summe aller Strom/Zeit-Produkte $\Sigma\, C_{tn}$, die während der Betriebsintervalle für die Betriebs- und Ruhezeitintervalle des Gerätes ermittelt werden.

Wenn zum Beispiel ein Sicherheitsfaktor F = 0,1 eingesetzt wird, dann gilt $x \cdot C_{t0} = 0,9 \cdot Ct_0$. Wenn aber ausgehend von der Gleichung (1) angenommen wird, daß das Transportzeitintervall < ½ Jahr ist, d.h. 4071h = 169 Tage nicht überschreitet, wobei sich ein Strom/Zeit-Produkt $C_{t1}$ = 4071 h (61,4 $\mu A$) = 249990,79 $\mu Ah$ = ½ $C_{t0}$ ergibt, wenn $C_{t0}$ = 1Ah, dann kann die Gleichung (8) vereinfacht werden. Anhand der Ungleichung (12) kann grob vom Mikroprozessor überprüft werden, ob die verbleibende Restkapazität nicht mehr ausreicht und die Batterie gewechselt werden muß:

$$\tfrac{3}{4}\, C_{t0} < C_{t2} + C_{t3} + C_{t4} + \ldots + C_{tn} + \ldots + C_{tz} \qquad (12)$$

Ein Grenzwert $C_H$ für eine Warnung und Aufforderung zum Batterietausch liegt vorzugsweise im Bereich

$0{,}75 \cdot C_{t0} \leq C_H \leq 0{,}9 \cdot C_{t0}$.

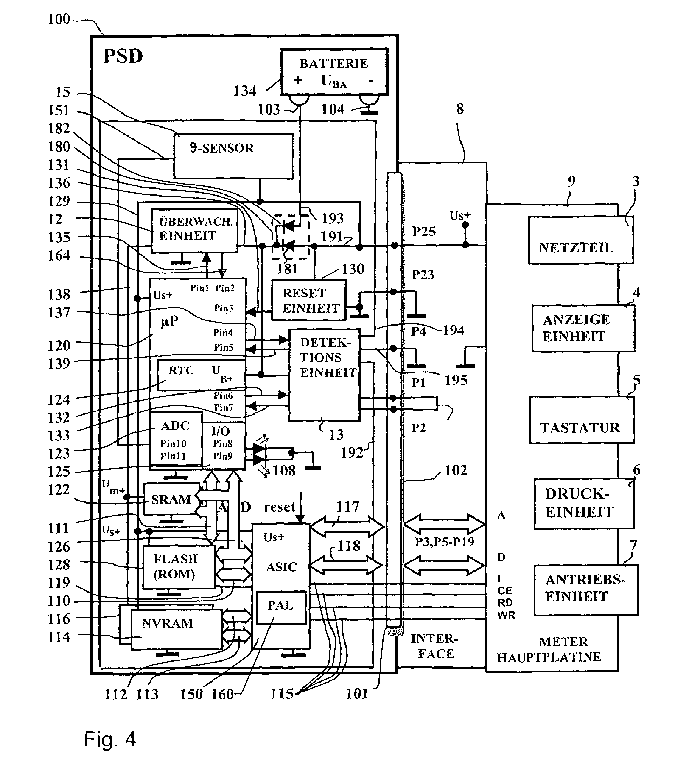

Die Figur 4 zeigt ein Blockschaltbild des postalischen Sicherheitsmoduls PSD 100, welches in einer bevorzugten Variante mit einer Frankiermaschine verschaltet ist. Ein Netzteil 3, einen Anzeigeeinheit 4, eine Tastatur 5, eine Druckeinheit 6 und eine Antriebseinheit 7 sind mit der Meter-Hauptplatine 9 des Meters bzw. einer Frankiermaschine verbunden. Das Netzteil 3, die Anzeigeeinheit 4, die Tastatur 5 und die Antriebseinheit 7 können außerhalb eines Sicherheitsbereiches angeordnet sein. Das postalische Sicherheitsmodul PSD 100 steht über einen Systembus 115, 117, 118, über eine Kontaktgruppe 101,102 und über ein Interface 8 mit der Meter-Hauptplatine 9 des Meters bzw. der Frankiermaschine in Kommunikationsverbindung und wird entweder vom Netzteil 3 mit einer Systemspannung oder von der ersten Batterie 134 mit Batteriespannung versorgt. Der Modulprozessor 120 kann über den Systembus und beispielsweise ein - nicht gezeigtes - Modem in Kommunikationsverbindung mit einer entfernten Datenzentrale (nicht gezeigt) eintreten. Um ein Guthaben zu laden und die postalischen Abrechnungsdaten in nichtflüchtigen Speichern unterschiedlicher Technologie zu speichern, sind ein erster und zweiter nichtflüchtiger Speicher im postalischem Sicherheitsmodul PSD 100 entsprechend ausgebildet. Die Abrechnung wird vom anwenderspezifischen Schaltkreis ASIC 150 des postalischen Sicherheitsmoduls PSD 100 vollzogen. Der ASIC 150 enthält mindestens eine Hardware-Abrecheneinheit für die Berechnung der zu speichernden postalischen Daten. Der ASIC 150 wird durch eine Programmable Array Logic (PAL) 160 gesteuert. In der Logik PAL 160 ist eine Zugriffslogik für den ASIC 150 untergebracht.. Ein Adreß- und Steuerbus 117, 115 von der Hauptplatine des Meters ist an entsprechenden Pins der Logik PAL 160 angeschlossen und die PAL 160 erzeugt mindestens ein Steuersignal für das ASIC 150 und ein Steuersignal 119 für den Programmspeicher FLASH 128. Der Modulprozessor 120 arbeitet ein Programm ab, das im FLASH 128 gespeichert ist. Der Modulprozessor 120 und die anderen Baugruppen, wie FLASH 128, ASIC 150 und PAL 160 sind über einen modulinternen Systembus miteinander verbunden, der Leitungen 110,111,126,119 für Daten-, Adreß- und Steuersignale enthält. Als Modulprozessor 120 eignet sich besonders ein KS32C41000 RISK MICROPROCESSOR der Firma Samsung. Letzterer weist intern eine Verarbeitungseinheit CPU 121, eine Echtzeituhr RTC 124, einen A/D-Umsetzer ADC 123 und eine Ein/Ausgabe-Einheit 125 auf. Der Modulprozessor 120 des Sicherheitsmoduls 100 ist über einen modulinternen Datenbus 126 mit einem FLASH 128 und mit dem ASIC 150 verbunden. Der FLASH 128 dient als Programmspeicher und wird mit Systemspannung Us+ versorgt. Er ist beispielsweise ein 128 Kbyte- FLASH-Speicher vom Typ AM29F010-45EC. Der Modulprozessor 120 des Sicherheitsmoduls 100 liefert über einen internen Adreßbus 111 die Adressen 0 bis 15 an die entsprechenden Adresseingänge des FLASH 128 und eines statischen Arbeitsspeichers SRAMs 122. Der ASIC 150 des Sicherheitsmoduls 100 steht über die Kontaktgruppe 101,102 des Interfaces mit dem Datenbus 118, mit dem Adreßbus 117 und dem Steuerbus 115 der Hauptplatine des Meters in Kommunikationsverbindung.

Die RESET-Einheit 130 ist über die Leitung 131 mit dem Pin 3 des Modulprozessors 120 und mit einem Pin des ASIC's 150 verbunden. Der Modulprozessor 120 und das ASIC 150 werden bei Absinken der Systemspannung durch eine Resetgenerierung in der RESET-Einheit 130 zurückgesetzt. In den Ruhezeiten außerhalb des Normalbetriebes speist die erste Batterie 134 die Echtzeituhr 124 mit den Datums-/Uhrzeitregistern und den statischen Arbeitsspeicher SRAM 122, welcher sicherheitsrelevante Daten enthält.

Der negative Pol 104 der ersten Batterie 134 ist auf Masse und einen Pin P23 der Kontaktgruppe 101 gelegt. Der positive Pol 103 der ersten Batterie 134 ist über die Leitung 193 mit dem einen Eingang des Spannungsumschalters 180 und der Pin P25 der Kontaktgruppe 101, der die Systemspannung führt ist über eine Leitung 191 mit dem anderen Eingang des Spannungsumschalters 180 verbunden. Wenn die Systemspannung auf eine höhere Nennspannung ausgelegt ist als die erste Batterie 134, dann reichen Schottky-Dioden zur Entkopplung aus, andernfalls müssen im Spannungumschalter 180 gesteuerte Schalter eingesetzt werden. Als Spannungsumschalter 180 eignet sich der Schaltkreis vom Typ DS 1314 von der Firma Dallas Semiconductor oder ein handelsüblicher Schaltkreis vom Typ ADM 8693ARN. Die erste Batterie 134 ist beispielsweise eine Lithium-Batterie vom Typ CR ½ AA CD der Firma Varta. Deren Nennkapazität $C_{t0}$ wird mit 950 mAh angegeben. Die Lebensdauer ist bei optimalen Betriebs- und Lagerbedingungen nur durch die Speicherzeit und Lagerzeit dieser Batterie begrenzt. Natürlich eignet sich als erste Batterie 134 auch jede andere 3V- Lithium-Batterie höherer Kapazität, wie zum Beispiel der Typ SL-389/P gemäß DE 199 12 780 A1.

Der Ausgang des Spannungsumschalters 180 liegt über die Leitung 136 an einer Spannungsüberwachungseinheit 12, an einer Detektionseinheit 13 und an einer Echtzeituhr 124 des Mikroprozessors an. Die Spannungsüberwachungseinheit 12 und die Detektionseinheit 13 stehen mit den Pins 1, 2 und Pins 4, 5 des Mikroprozessors 120 über die Leitungen 135, 164 und 137, 139 in Kommunikationsverbindung. Der P25 der Kontaktgruppe 101, der die Systemspannung führt, ist über eine Leitung 129 mit dem Versorgungseingang eines ersten Speichers 114 verbunden. Letzterer ist zum Beispiel ein statischer Arbeitsspeicher, der durch die vorhandene Systemspannung zum nichtflüchtigen Speicher NVRAM 114 einer ersten Technologie wird.

Am Versorgungseingang eines als Arbeitsspeicher dienenden statischen Arbeitsspeichers SRAM 122 und eines zweiten nichtflüchtigen Speichers NVRAM 116 liegt eine Spannung $U_m+$ an, die vom Ausgang der Überwachungseinheit 12 auf der Leitung 138 geliefert wird. Bei ausgeschalteter Systemspannung liegt eine der beiden Batteriespannungen an. Sinkt die Spannung der Batterie während des Batteriebetriebs unter eine bestimmte Grenze, so wird von der Schaltung der Überwachungseinheit 12 der Speisepunkt für das SRAM mit Masse verbunden. Das heißt, die Spannung am SRAM liegt dann bei 0V. Das führt dazu, daß der SRAM 122, der z.B. wichtige kryptografische Schlüssel enthält, sehr schnell gelöscht wird. Gleichzeitig fällt auch die Versorgungspannung des zweiten nichtflüchtigen Speichers NVRAM 116 auf Null, jedoch gehen keine Daten verloren. Der zweite nichtflüchtige Speicher NVRAM basiert auf einer zweiten Technologie (SHADOW-RAM). Diese zweiten Technologie umfaßt vorzugsweise ein RAM und ein EEPROM, wobei letzteres die Dateninhalte bei Systemspannungsausfall automatisch übernimmt. Der NVRAM 116 der zweiten Technologie ist mit den entsprechenden Adreßsund Dateneingängen des anwenderspezifischen Schaltkreises ASIC 150 über einen internen Adreß- und Datenbus 112, 113 verbunden.

Die Schaltung der Spannungsüberwachungseinheit 12 ist beispielsweise so dimensioniert, daß jegliches Absinken der Batteriespannung auf der Leitung 136 unter die spezifizierte Schwelle von 2,6 V zum Ansprechen der Schaltung 12 führt. Gleichzeitig mit der Indikation der Unterspannung der Batterie wechselt die Schaltung 12 in einen Selbsthaltezustand, in dem sie auch bei nachträglicher Erhöhung der Spannung bleibt. Sie liefert außerdem ein Statussignal 164. Beim nächsten Einschalten des Moduls kann der Modulprozessor 120 den Zustand der Schaltung (Statussignal) abfragen und damit und/oder über die Auswertung der Inhalte des gelöschten Speichers darauf schließen, daß die Batteriespannung zwischenzeitlich einen bestimmten Wert unterschritten hat. Der Modulprozessor 120 kann die Überwachungsschaltung 12 zurücksetzen, d.h. "scharf" machen. Letztere reagiert auf ein Steuersignal auf der Leitung 135.

Die Leitung 136 am Eingang der Spannungsüberwachungseinheit 12 versorgt zugleich eine Detektions-Einheit 13 mit Betriebs- oder Batteriespannung. Die Detektions-Einheit 13 ist mit einer Leiterschleife 192, 194 verbunden, welche im Gehäuse des Sicherheitsmoduls eingearbeitet und mit Vergußmasse (zum Beispiel Kunstharz) vergegossen ist. Ein Angriff auf das Gehäuse (zum Beispiel Bohren) kann damit detektiert werden.

Vom Prozessor 120 wird der Zustand der Detektions-Einheit 13 über die Leitung 139 abgefragt oder die Detektions-Einheit 13 wird vom Modulprozessor 120 über die Leitung 137 ausgelöst bzw. gesetzt. Nach dem Setzen wird eine statische Prüfung auf Anschluß durchgeführt. Dazu wird über eine Leitung 195 Massepotential abgefragt, welches am Anschluß P4 des Interfaces 8 des postalischen Sicherheitsmoduls PSD 100 anliegt und nur abfragbar ist, wenn der Sicherheitsmodul 100 ordnungsgemäß gesteckt ist. Bei gesteckten Sicherheitsmodul 100 wird Massepotential des negativen Pols 104 der Batterie 134 des postalischen Sicherheitsmoduls PSD 100 auf den Anschluß P23 des Interfaces 8 gelegt und ist somit am Anschluß P4 des Interfaces über die Leitung 192 von der Detektions-Einheit 13 abfragbar.

An den Pins 6 und 7 des Modulprozessors 120 sind über die Detektionseinheit 13 Leitungen angeschlossen, welche nur bei einem, beispielsweise an die Hauptplatine des Meters 1, gesteckten Sicherheitsmodul 100 eine Leiterschleife 17 bilden. Zur dynamischen Prüfung des Angeschlossenseins des postalischen Sicherheitsmoduls PSD 100 an der Hauptplatine des Meters 1 werden vom Modulprozessor 120 wechselnde Signalpegel in ganz unregelmäßigen Zeitabständen an die Pin's 6, 7 angelegt und über die Schleife zurückgeschleift.

Der Modulprozessor 120 ist mit der Ein/Ausgabe-Einheit 125 ausgestattet, deren Anschlüsse Pin's 8, 9 zur Ausgabe mindestens eines Signals zur Signalisierung des Zustandes des Sicherheitsmoduls 100 dienen. An den Pin's 8 und 9 liegen I/O-Ports der Ein/Ausgabe-Einheit 125, an welchen modulinterne Signalmittel angeschlossen sind, beispielsweise farbige Lichtemitterdioden LED's 107, 108. Diese signalisieren den Modulzustand bei einem auf die Hauptplatine des Meters gesteckten Sicherheitsmoduls 100 durch eine Öffnung 109 im Metergehäuse. Die Sicherheitsmodule können in ihrem Lebenszyklus verschiedene Zustände einnehmen. So muß zum Beispiel der Batteriezustand detektiert werden und weiterhin, ob das Sicherheitsmodul gültige kryptografische Schlüssel enthält. Auch ist es auch wichtig zu unterscheiden, ob das Sicherheitsmodul funktioniert oder defekt ist. Die genaue Art und Anzahl der Modulzustände ist von den realisierten Funktionen im Sicherheitsmodul und von der Implementierung abhängig. Zur Auswertung der Temperatur ist ein Sensor 15 über den Analog/Digital-Umsetzer 123 mit dem Mikroprozessor ist verbunden. Der P25 der Kontaktgruppe 101, der die Systemspannung führt, liefert die Versorgungsspannung für den Sensor 15. Der Analog/ Digital-Umsetzer 123 liefert dem Mikroprozessor einen digitalisierten Meßwert zur Auswertung der vorliegenden Temperatur. Der Mikroprozessor ist über ein Ein/Ausgabemittel 125 entweder direkt mit einem Signalisierungsmittel 107, 108 für die Zustände des Sicherheitsmoduls oder indirekt mit einem Signalisierungsmittel des Meters (Beeper) bzw. mit deren Anzeigeeinheit 4 verbunden.

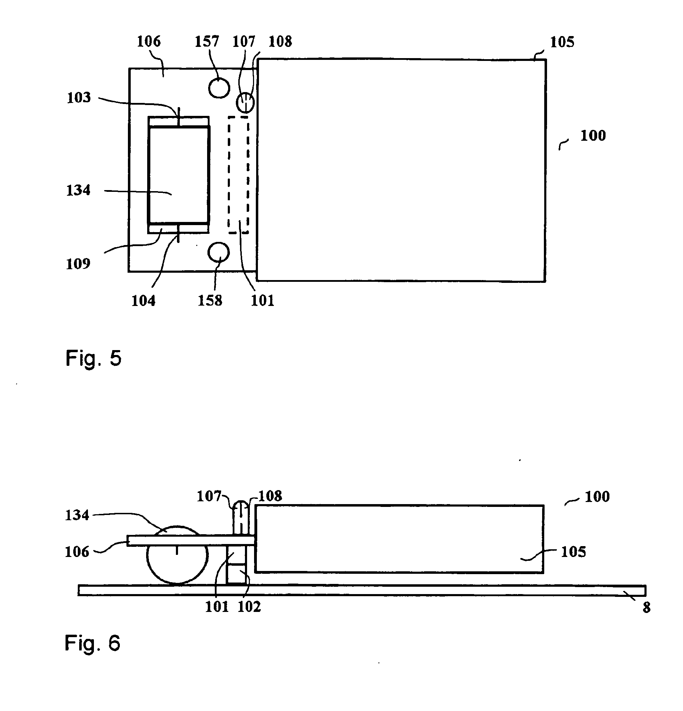

Die Figur 5 zeigt den mechanischen Aufbau des Sicherheitsmoduls in Draufsicht. Das Sicherheitsmodul ist als Multi-Chip-Modul ausgebildet, d.h. mehrere Funktionseinheiten sind in einem ersten Teil einer Leiterplatte 106 verschaltet. Die Vergußmasse 105 umgibt quaderförmig den ersten Teil der Leiterplatte 106, während ein zweiter Teil der Leiterplatte 106 für die erste Batterie 134 von Vergußmasse frei bleibt. Die Leiterplatte 106 hat eine Öffnung 109 für die erste Batterie 134 und Lötstellen oder Batteriekontaktklemmen 103 und 104 für den Anschluß der Pole der Batterie 134, vorzugsweise unterhalb der Leiterplatte 106. Zum Anstecken des postalischen Sicherheitsmoduls PSD 100 auf die Hauptplatine des Meters ist die Kontaktgruppe 101 (gestrichelt gezeichnet) unterhalb der Leiterplatte 106 (Leiterbahnseite) des Sicherheitsmoduls 100 angeordnet.

In der Figur 6 ist eine Seitenansicht des postalische Sicherheitsmoduls dargestellt. Wird das Sicherheitsmodul über Interface 8 auf die Hauptplatine gesteckt, dann kann es innerhalb des Metergehäuses dergestalt angeordnet sein, so daß das Signalmittel 107, 108 nahe einer Öffnung ist oder in diese hineinragt. Das Metergehäuse ist damit vorteilhaft so konstruiert, daß der Benutzer die Statusanzeige des Sicherheitsmoduls trotzdem von außen sehen kann. Beide Leuchtdioden sind in einem gemeinsamen Bauelementegehäuse untergebracht (Bicolorleuchtdiode), weshalb die Abmaße bzw. der Durchmesser der Öffnung relativ klein bleiben kann und in der Größenordnung des Signalmittels liegt. Prinzipiell sind drei unterschiedliche Farben darstellbar (rot, grün, orange), jenachdem die Leuchtdioden LED's einzeln oder gleichzeitig angesteuert werden. Zur Zustandsunterscheidung werden die Leuchtdioden LED's auch einzeln oder zusammen blinkend ggf. abwechseln blinkend gesteuert, so daß neun verschiedene Zustande unterschieden werden können, in welchem mindestens eine der beiden Leuchtdioden LED's aktiviert wird. Die beiden Leuchtdioden 107 und 108 des Signalmittels können alternativ an einer Stelle angeordnet werden, so daß letztere nur von einem Service-Techniker beobachtet werden können oder die zwei Ausgangssignale der 1/O-Ports an den Pin 8, 9 des Modulprozessors 120 werden über den Prozessor der Hauptplatine zur Anzeigeeinheit 5 übermittelt. Der Modulprozessor nimmt eine Überwachung und Signalisierung des Modulzustandes vor und wird nur im Betriebszeitintervall aktiviert, d.h. bei Versorgung des Sicherheitsmoduls mit Systemspannung, was sich auf die Batterie schonend auswirkt. Der Modulprozessor überwacht die hardwaremäßige Abrecheneinheit, die Speicher und die erste Batterie 134 sowie weitere Baugruppen im Sicherheitsbereich. Dabei steht die sichere Erkennung von Fehlfunktionen oder Ausfällen bzw. Erschöpfung sowie eine geeignete Reaktion darauf im Vordergrund.

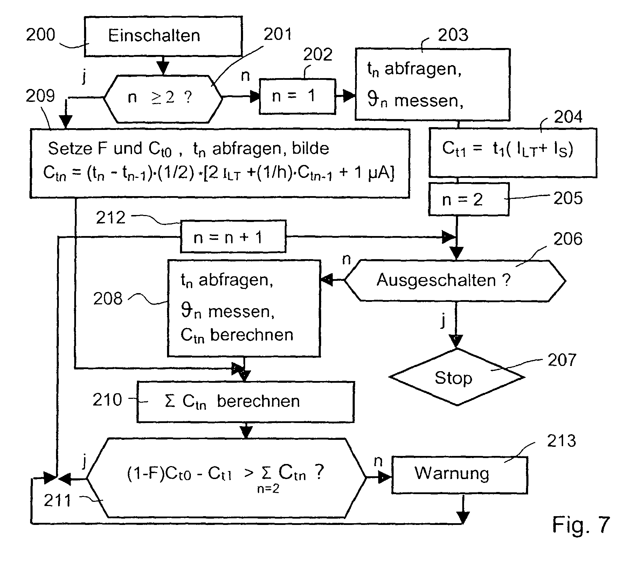

Die Figur 7 zeigt ein Flußdiagramm für das erfindungsgemäße Verfahren. Bei der Ermittlung des Erfordernis zum Batterietausch führt der Modulprozessor 120 eine Anzahl von Schritten durch.

Nach dem Einschalten (Schritt 200) des Gerätes wird ein Abfrageschritt 201 erreicht und der Zählstand n eines Schleifenzählers ausgewertet. Der Schleifenzähler steht anfangs auf $n = 0$ und somit wird auf den Schritt 202 weiter verzweigt, in welchem der Schleifenzähler auf $n = 1$ gestellt wird.

Dann wird ein Schritt 203 erreicht, um den Zählstand des Echtzeitzählers zum Zeitpunkt $t_1$ abzufragen. Außerdem wird zum Zeitpunkt $t_1$ die Raumtemperatur $\vartheta_1$ gemessen. Anhand der letzteren kann in einem - nicht dargestellten - Subschritt entschieden werden, ob die Temperatur im zulässigen Temperaturbereich für den Betrieb des Modul liegt. Im Schritt 204 wird dann - für die indirekte Kapazitätsmessung gemäß der Gleichung (1) - das Strom/Zeit-Produkt $C_{t1}$ für die Transportzeit gebildet, wobei die empirisch bestimmten Ströme, bestehend aus Laststrom und Batterieselbstentladestrom, in Rechnung gestellt werden. Dann wird über einen Schritt 205, in welchem der Schleifenzähler auf $n = 2$ gestellt wird, weiter auf einen Schritt 206 verzweigt, in welchem abgefragt wird, ob das Gerät inszwischen ausgeschaltet werden soll. Ist letzteres der Fall, dann wird der Betrieb gestoppt (Schritt 207). Anderenfalls wird auf einen Schritt 208 verzweigt, um den Zählstand des Echtzeitzählers zum Zeitpunkt $t_n$ abzufragen und die zum Zeitpunkt $t_n$ gemessene Raumtemperatur $\vartheta_n$ für die Berechnung des zugehörigen Strom/Zeit-Produktes $C_{tn}$ nach der Gleichung (4) zu verwenden. Im Folgeschritt 210 werden die Strom/Zeit-Produkte addiert, wie das aus den Gleichungen (3) bzw. (10) ersichtlich ist. Ein Zählstand wird dabei so modifiziert, daß dieser sich einer für die Batterie spezifischen Ausfallschwelle nähert, bei der eine Warnung vom Gerät ausgegeben wird, bevor das Verbrauchsende bzw. Lebensdauerende der Batterie erreicht wird.

Im Abfrageschritt 211 wird das Erfülltsein der Ungleichung (11) abgefragt. Bei einem Erfülltsein der Ungleichung (11) wird über den Schritt 213 auf den Schritt 212 zurückverweigt, wobei im Schritt 213 eine Warnung generiert und angezeigt wird. Bei Nichterfülltsein der Ungleichung (11) wird direkt auf den Schritt 212 zurückverweigt. Im Schritt 212 wird der Schleifenzähler inkrementiert auf $n = n + 1$. Dann wird auf den Schritt 206 zurückverzweigt, in welchem wieder das Ausgeschaltensein abgefragt wird. Beim nächsten Einschalten, beispielsweise am nächsten morgen, nach einem Ruhezeitintervall, wird vom Schritt 200 auf den Abfrageschritt 201 verzweigt und abgefragt, ob der vorbestimmte Zählerstand $n \geq 2$ erreicht oder überschritten ist, um auf einen Schritt 209 zu verzweigen. Im vorgenannten Schritt 209 wird mindestens der Zählstand des Echtzeit-zählers zum Zeitpunkt $t_n$ abgefragt und ein bestimmtes Strom/Zeit-Produkt $C_{tn}$ für das Ruhezeitintervall gemäß Gleichung (7) gebildet. Dann wird auf den Schritt 210 verzweigt und die Summe aller Strom/Zeit-Produkte $\Sigma\, C_{tn}$ ermittelt, um anschließend wieder die gemäß der Gleichung (11) zu stellende Abfrage auszuwerten. Somit wird bei der indirekten Kapazitätsmessung einer Batterie das Strom/Zeit-Produkt $C_{t1}$ für die Ruhezeit und/oder für die Transportzeit gebildet und hinsichtlich der Verminderung der Batteriekapazität für eine abzugebenden Warnung ausgewertet.

Ebenso kann die Messung von einem Parameter, der auf den Verbrauch oder die Lebensdauer eines anderen Bauteils einen ungünstigen Einfluß nimmt, durch die Messung mindestens zweier stellvertretender Parameter ersetzt werden, deren Änderungen den aktuellen Zustand des Bauteils zu berechnen gestatten. Wieder wird ein Zählstand so modifiziert, daß dieser sich einer für das Bauteil spezifischen Ausfallschwelle nähert und dass eine Warnung vom Gerät ausgegeben wird, bevor das Verbrauchsende bzw. Lebensdauerende des Bauteils erreicht wird. Die Erfindung kann vorteilhaft für die indirekte Messung von Parametern von Bauteilen eingesetzt werden, die sich in einem Sicherheitsmodul oder in dessen unmittelbarer Nachbarschaft befinden

Ein Sicherheitsmodul ist vorzugsweise zum Einsatz in postalischen Geräten bestimmt, insbesondere zum Einsatz in einer Frankiermaschine.

Jedoch kann das Sicherheitsmodul auch eine andere Bauform aufweisen, die es ermöglicht, daß es beispielsweise auf die Hauptplatine eines Personalcomputers gesteckt werden kann, der als PC-Frankierer einen handelsüblichen Drucker ansteuert.

Die Erfindung ist nicht auf die vorliegenden Ausführungsform beschränkt, da offensichtlich weitere andere Anordnungen bzw. Ausführungen der Erfindung entwickelt bzw. eingesetzt werden können, die - vom gleichen Grundgedanken der Erfindung ausgehend - von den anliegenden Schutzansprüchen umfaßt werden.

**Patentansprüche**

1. Verfahren zur Ermittlung eines Erfordernises zum Austausch eines Bauteils, wobei die Messung von einem Parameter, der auf den Verbrauch oder die Lebensdauer des Bauteils einen ungünstigen Einfluß nimmt, durch die Messung mindestens zweier stellvertretender Parameter ersetzt wird, deren Änderungen den aktuellen Zustand des Bauteils zu berechnen gestatten, **gekennzeichnet dadurch, dass** das Bauteil eine Batterie ist, wobei das Erfordernis zum Austausch der Batterie basierend auf einer Auswertung einer Messung der Umgebungstemperatur in Bezug auf den Selbstentladestrom der Batterie festgestellt wird, dass mittels einer ununterbrochenen Echtzeitmessung von einem Mikroprozessor Zeitintervalle ermittelt werden, die in einem unterschiedlichen Maße zur Kapazitätsverminderung der Batterie beitragen, wobei zwischen einem Transportzeitintervall der Batterie sowie Betriebs- und Ruhezeitintervallen eines Gerätes unterschieden wird, dass die Messung und Auswertung der Umgebungstemperatur in Bezug auf den Selbstentladestrom der Batterie nach dem Transportzeitintervall oder nach einem Ruhezeitintervall im Betriebszeitintervall erfolgt, dass Strom/Zeit-Produkte für die vorgenannten Intervalle im Betriebszeitintervall gebildet werden, wobei empirisch ermittelte Ströme in die Berechnung eingehen, die im Transportzeitintervall der Batterie oder im Ruhezeitintervall des Gerätes fließen und die Batteriekapazität vermindern sowie dass eine Warnung ausgegeben wird, bevor das Verbrauchsende bzw. Lebensdauerende der Batterie erreicht wird.

2. Verfahren, nach Anspruch 1, **gekennzeichnet dadurch, dass** in den Betriebszeitintervallen die Strom/Zeit-Produkte berechnet werden:

   - für den temperaturabhängigen Batterieentladestrom, der während der Betriebszeitintervalle des Gerätes fließt, und
   - für den temperaturabhängigen Batterieentladestrom und einen in den Ruhezeitintervallen des Gerätes fließenden Laststrom $I_{LT}$.

**Claims**

1. A method for determining the necessity to replace a component, wherein the measurement of one parameter that has an adverse effect on the consumption or service life of the component is replaced by the measurement of at least two representative parameters the alterations of which allow to calculate the current condition of the component, **characterized in that** the component is a battery, wherein the necessity to replace the battery is determined on the basis of an analysis of a measurement of the ambient temperature with regard to the self-discharge current of the battery; that, by means of uninterrupted real-time measurement, a microprocessor determines time intervals that contribute to a different extent to the reduction of the capacity of the battery, distinguishing between a transport-time interval of the battery as well as operating- and rest-time intervals of a device; that the measurement and analysis of the ambient temperature with regard to the self-discharge current of the battery is made after the transport-time interval or after a rest-time interval during the operating-time interval; that current/time products for the aforementioned intervals are formed in the operating-time interval, wherein empirically determined currents that flow during the transport-time interval of the battery or during the rest-time interval of the device and reduce the capacity of the battery are included in the calculation; and that a warning is issued before the end of consumption or the end of the service life of the battery is reached.

2. A method according to Claim 1, **characterized in that**, during the operating-time intervals, the current/time products are calculated

   - for the temperature-dependent battery discharge current that flows during the operating-time intervals of the device, and
   - for the temperature-dependent battery discharge current and a load current $I_{LT}$ that flows during the rest-time intervals of the device.

**Revendications**

1. Procédé destiné à déterminer une condition préalable en vue d'échanger un composant, la mesure d'un paramètre, qui prend une influence défavorable sur la consommation ou la durée de vie du composant, étant remplacée par la mesure d'au moins deux paramètres remplaçants, dont les changements permettent de calculer l'état actuel du composant, **caractérisé en ce que** le composant est une batterie, la condition préalable en vue d'échanger la batterie étant fixée en s'appuyant sur une évaluation d'une mesure de la température ambiante par rapport au courant de décharge spontanée de la batterie, **en ce qu'**à l'aide d'une mesure inintérrompue en temps réel des intervalles-temps sont déterminés d'un microprocesseur qui contribuent à une diminution de capacité de la batterie dans une proportion différente, un appareil étant différencié entre un intervalle-temps de transport de la batterie ainsi qu'entre des intervalles-temps de service et de repos d'un appareil, **en ce que** la mesure et l'évaluation de la température ambiante a lieu par rapport au courant de décharge spontanée de la batterie après l'intervalle-temps de transport ou après un intervalle-temps de repos dans l'intervalle-temps de service, **en ce que** les produits de l'électricité/du temps sont formés pour les intervalles susmentionnés dans l'intervalle-temps de service, les courants déterminés de manière empirique entrant dans le calcul circulent dans l'intervalle-temps de transport de la batterie ou dans l'intervalle-temps de repos de l'appareil et diminuent la capacité de la batterie, ainsi qu'en ce qu'un avertissement est déclenché avant que la fin de la consommation ou, selon le cas, avant que la fin de la durée de vie de la batterie ne soit atteinte.

2. Procédé selon la revendication 1, **caractérisé en ce que** les produits de l'électricité/du temps sont calculés dans les intervalles-temps de service :

    - Pour le courant de décharge de la batterie variable avec la température circulant durant les intervalles-temps de service de l'appareil,
    - Pour le courant de décharge de la batterie variable avec la température et un courant sous charge $I_{LT}$ circulant dans les intervalles-temps de repos de l'appareil

**Verfügbare Kapazität C**

in Ah

Temperatur in °C

Fig. 1

Fig. 2

Fig. 3

Fig. 4

Fig. 5

Fig. 6

Fig. 7

200 — Einschalten

201

202 — n = 1

203 — $t_n$ abfragen, $\vartheta_n$ messen,

204 — $C_{t1} = t_1( I_{LT} + I_S)$

205 — n = 2

209 — Setze F und $C_{t0}$ , $t_n$ abfragen, bilde
$C_{tn} = (t_n - t_{n-1})\cdot(1/2)\cdot[2\ I_{LT} +(1/h)\cdot C_{tn-1} + 1\ \mu A]$

n ≥ 2 ?

206 — Ausgeschalten ?

207 — Stop

212 — n = n + 1

208 — $t_n$ abfragen, $\vartheta_n$ messen, $C_{tn}$ berechnen

210 — $\Sigma\ C_{tn}$ berechnen

211 — $(1-F)C_{t0} - C_{t1} > \sum_{n=2} C_{tn}$ ?

213 — Warnung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 417447 B1
- DE 19549376 A1
- DE 19958948827
- DE 19912780 A1

- JP 11183575 A
- JP 9269360 A
- JP 9211091 A
- JP 2000184619 A